# EUROPÄISCHE PATENTSCHRIFT

(11) **EP 1 509 979 B1**
(45) Veröffentlichungstag und Bekanntmachung des Hinweises auf die Patenterteilung: **30.08.2006**
(21) Anmeldenummer: 03729894.0
(22) Anmeldetag: 21.05.2003
(51) Int. Cl.: H01S 4/00, H05G 2/00

(54) **VERFAHREN UND ANORDNUNG ZUR ERZEUGUNG VERSTÄRKTER SPONTANER EMISSION KOHÄRENTER KURZWELLIGER STRAHLUNG**
METHOD AND ARRANGEMENT FOR GENERATING AMPLIFIED SPONTANEOUS EMISSION OF COHERENT SHORT-WAVE RADIATION
PROCEDE ET DISPOSITIF POUR PRODUIRE UNE EMISSION SPONTANEE AMPLIFIEE DE RAYONNEMENT COHERENT DE FAIBLE LONGUEUR D'ONDE

(30) Priorität: 24.05.2002 DE 10224143
(43) Veröffentlichungstag der Anmeldung: 02.03.2005
(73) Patentinhaber: Forschungsverbund Berlin e.V., 12489 Berlin (DE)
(72) Erfinder: JANULEWICZ, Karol, 12209 Berlin (DE); LUCIANETTI, Antonio, c/o Lawrence Livermore, 94551 Livermore (CA); NICKLES, Peter, 14476 Gross Glienicke (DE); PRIEBE, Gerd, 10827 Berlin (DE); SANDNER, Wolfgang, 12527 Berlin (DE)
(74) Vertreter: Hengelhaupt, Jürgen
(86) Internationale Anmeldenummer: PCT/DE2003/001689
(87) Internationale Veröffentlichungsnummer: WO 2003/100929

(56) Entgegenhaltungen:
- US-A- 5 117 432
- GUO T ET AL: "GENERATION OF HARD X RAYS BY ULTRAFAST TERAWATT LASERS" REVIEW OF SCIENTIFIC INSTRUMENTS, AMERICAN INSTITUTE OF PHYSICS. NEW YORK, US, Bd. 72, Nr. 1, Januar 2001 (2001-01), Seiten 41-47, XP001072920 ISSN: 0034-6748
- T. FEURER: "Feedback-controlled optimization of soft-X-ray radiation from femtosecond laser produced plasmas" APPL. PHYS. B, Bd. 68, 1999, Seiten 55-60, XP002253457 in der Anmeldung erwähnt

## Beschreibung

Die Erfindung betrifft ein Verfahren und eine Anordnung zur Erzeugung verstärkter spontaner Emission kohärenter kurzwelliger Strahlung, insbesondere zum Pumpen von transienten Kurzpuls-Röntgenlasem.

Derartige transiente Kurzpuls-Röntgenlaser sind Quellen kohärenten Lichts im Wellenlängenbereich von 4 nm bis 60 nm, die auf der stimulierten Emission nach Erzeugung einer Besetzungsinversion mit Hilfe des so genannten transienten Verfahrens beruhen.

Dem Stand der Technik nach bekannt sind lasergepumpte stoßangeregte transiente Röntgenlaser, bei denen sowohl das für die Laseraktion notwendige Plasma, als auch in diesem die durch eine elektronenstoßgepumpte Anregung erforderliche Besetzungsinversion erzeugt wird. Das Plasma wird durch Bestrahlung eines Festkörper- oder eines Gas-Targets mit geeignet fokussierter Pumpstrahlung mittels Laser hoher Energien von ~10 J bis in den kJ-Bereich ausgebildet. Derartige Pumplasersysteme besitzen einen aufwendigen Aufbau, können nicht in table-top-Größe realisiert werden und liefern auch nur eine geringe mittlere Leistung (~1 W). Darin liegt eine wesentliche Beschränkung in der Verbreitung und Anwendbarkeit kompakter Kurzpuls-Röntgenlaser.

In den Jahren nach der ersten Realisierung eines Röntgenlasers 1984, beispielsweise beschrieben in Phys. Rev. Lett., Vol. 55, No. 17, October 1985, pp. 1753 - 1756 und ebenda Vol. 54, No. 2, January 1985, pp. 110 - 113, wurden diese - im Gegensatz zum transienten Verstärkungsregime - im quasistationären Regime mit nur einem langen ns-Pumppuls mit Energien von einigen 100 J bis in den kJ-Bereich betrieben. 1992 brachte die Einführung eines ebenfalls langen Vorpulses im Bereich von 0,5 bis 1 ns von geringer Energie eine merkliche Reduzierung der erforderlichen Pumpenergie auf unter 1 kJ (beschrieben in Phys. Rev. A, Vol. 48, No. 6, December 1993, pp. 4682 - 4685 und Phys. Rev. Lett., Vol. 70, No. 15, 12 April 1993, pp. 2285 - 2288). Mit dem Vorpuls, der mehrere hundert Piko- bis zu wenigen Nanosekunden vor dem Hauptpuls eingestrahlt wurde, konnte - bedingt durch die hydrodynamische Expansion - ein relativ homogenes Vorplasma erzeugt werden, das die Einkopplung des nachfolgenden Hauptpulses und die Ausbreitung des Röntgenimpulses erleichterte. Derartige Pumplaser sind jedoch weiterhin sehr groß und in nur wenigen Labors in der Welt verfügbar.

Auch in US 4 058 486 wird ein Verfahren zur Erzeugung von Röntgenstrahlen mittels eines niederenergetischen Vorpulses und eines höherenergetischen Hauptpulses beschrieben. Dabei sind die Intensitäten in beiden Pulsen vergleichbar. Der Vorpuls hat vorzugsweise eine Dauer von 1 bis 30 ns; diesem Puls folgt nach 1 bis 30 ns der Hauptpuls mit einer Dauer von 10⁻³ bis 30 ns und mindestens 0,1 J, vorzugsweise 10 bis 200 J in 1 bis 3 ns). Über Amplitude, Dauer und Form des Vorpulses werden typischerweise Intensität und Spektrum der Röntgenstrahlen eingestellt. Diese Lösung ist jedoch nur für den quasistationären Fall geeignet, der einerseits hohe Pumpenergie erfordert und andererseits nur lange Röntgenimpulse liefert.

Eine weitere drastische Reduzierung der Pumpenergie wurde erstmals 1995 bei der Realisierung eines stoßangeregten transienten Röntgenlasers in neonähnlichen Ti-lonen demonstriert und in Phys. Rev. Lett., Vol. 78, No. 14, 7 April 1997, pp. 2748 - 2751 beschrieben, wobei auf eine theoretische Vorhersage aus dem Jahre 1989 zurückgegriffen wurde. Die transiente Anregung benutzt ähnlich dem quasistationären Fall mit Vorpuls zwei Pumppulse. Der Unterschied besteht darin, dass neben einem Nanosekunden-Vorpuls nun zeitlich verzögert ein Pikosekunden-Pumppuls eingesetzt wird. Der lange Vorpulse mit einer Intensität im Bereich von Iₗ ∼ 10¹¹ bis 10¹³ W/cm² wird zuerst auf das Festkörper-Target eingestrahlt. Dazu wird er in Form eines dünnen Streifens auf das Target fokussiert, wobei die Abmessungen im Allgemeinen im Bereich von 50 bis 200 µm Breite und 2 bis 15 mm Länge liegen. Dieser Vorpuls erzeugt ein Plasma, in dem verschiedene lonengruppen enthalten sind, darunter auch die für die Lasertätigkeit notwendigen Ionen, beispielsweise nickel- oder neonähnliche Ionen. Ausserdem wird durch den Vorpuls - wie im quasistationären Fall - eine Verringerung des steilen Elektronendichtegradienten erzielt und generell eine Homogenisierung des Plasmas erreicht. Das wesentlich Neue gegenüber dem quasistationären Fall besteht jedoch darin, dass der kurze Hauptpuls eine schnelle Aufheizung des durch den Vorpuls erzeugten Plasmas bewirkt, die zu der charakteristischen transienten Besetzungsinversion führt, womit eine kurzzeitig erhöhte Verstärkung - bis zu zwei Größenordnungen - gegenüber dem quasistationären Fall einher geht. Dadurch kann ebenfalls die für den Lasingprozess erforderliche Pumpenergie adäquat reduziert werden.

In Phys. Rev. Lett., Vol. 84, No. 21, May 2000, pp. 4834 - 4837 wurde dargestellt, dass gesättigte Laserverstärkung in einem transienten Röntgenlaser bei einer Wellenlänge von 14,7 nm u.a. durch Bestrahlung von Targets mit einem schwachen Vorpuls und dem intensiven Hauptpuls erreicht wurde. Der Einsatz des ps-Pulses ist im Vergleich zum Start des Vorpulses bedingt durch die hydrodynamische Expansion des Plasmas im Bereich von 600 bis 1.500 ps verzögert. Der konkrete Wert der Verzögerung ergibt sich aus der Dynamik des Plasmas. Diese beiden Pumppulse, der lange Vorpuls und der zeitlich verzögerte kurze Hauptpuls, werden typischerweise durch Strahlteilung in einem chirped puls amplifying (CPA) Lasersystem erzeugt. Am Ende des Lasersystems müssen beide Teilstrahlen derart wieder zusammengeführt werden, dass sie sich im Fokus mit möglichst hoher Präzission auf dem Target räumlich überlagern, zeitlich aber zueinander verzögert sind. Dies erfordert aber einen technisch aufwendigen Aufbau.

Eine weitere Verbesserung ist in J. Opt. Soc. Am. B, Vol. 17, No. 6, June 2000, pp. 1093 - 1097 beschrieben. Hier wird auf Grund der kurzen Lebensdauer des transienten Zustandes der Besetzungsinversion der Röntgenlaser derart angeregt, dass der kurze Pumppuls sich mit nahezu Lichtgeschwindigkeit entlang der Pumpsäule bewegt (traveling-wave-Anregung). Damit ist der Pumppuls räumlich optimal an den sich mit Lichtgeschwindigkeit ausbreitenden Röntgenimpuls gekoppelt, was zu einer Erhöhung der Verstärkung führt. Bei all diesen Implementierungen lag die erforderliche totale Pumpenergie in Abhängigkeit vom verwendeten Targetmaterial immer noch in der Größenordnung zwischen 5 und 20 J.

In DE 100 47 779 A1 ist ein Verfahren zur Umwandlung von Laserstrahlung in Röntgenstrahlung beschrieben, bei dem ein Material zur Erzeugung eines Plasmas mit amplituden- und/oder phasenmodulierten sub-ns-Pulsen bestrahlt wird. Ziel dieses Verfahrens ist es, in Abhängigkeit der gemessenen Energie der vom Plasma emittierten inkohärenten Strahlung die Pumppulse in ihrer Amplituden- und/oder Phasenstruktur hinsichtlich der Intensität der inkohärenten Strahlung zu optimieren. Ebenso wie in Appl. Phys. B 68, 55-60 (1999) wird von zwei aufeinanderfolgenden Pulsen ausgegangen. Diese werden erzeugt, indem ein Laserstrahl geteilt wird, um zwei Pumppulse, einen langen Vorpuls und einen zeitlich verzögerten kurzen Hauptpuls zu erzeugen. Wie bereits beschrieben müssen am Ende des Lasersystems beide Strahlen wieder mit aufwendigen Mitteln zusammengeführt werden.

Aufgabe der Erfindung ist es nun, ein Verfahren zur Erzeugung verstärkter spontaner Emission kohärenter kurzwelliger Strahlung, insbesondere zum Pumpen von transienten Kurzpuls-Röntgenlasern, und eine Anordnung anzugeben. Dabei soll die Lösung mit im Vergleich zum erwähnten Stand der Technik weniger technisch aufwendigen Mitteln realisiert werden und den Aufbau von entsprechenden Geräten mit hoher Folgefrequenz und höherer mittlerer Ausgangsleistung in Tischgröße ermöglichen.

Die Aufgabe wird erfindungsgemäß durch ein Verfahren zur Erzeugung verstärkter spontaner Emission kohärenter kurzwelliger Strahlung im Bereich von 4 nm bis 60 nm, insbesondere zum Pumpen von transienten Kurzpuls-Röntgenlasern, gelöst, bei dem mit nur einem Pumpuls im sub-ns-Bereich mit zeitlich modulierter Intensitätsverteilung, aufweisend einen Vorder- und einen Hauptteil, ein Target bestrahlt wird, wobei der Vorderteil des Pumpulses über eine Dauer von einigen 100 ps eine austeigende Intensität von kleiner 1% der maximalen Intensität des Hauptteils des Pumppulses von 10¹² W/cm² bis 10¹⁸ W/cm² aufweist.

Als Target kann ein festes, flüssiges, plasma- oder gasförmiges Target verwendet werden.

In einer Ausführungsform der Erfindung weist der Hauptteil des Pumpulses eine Halbwertsbreite im sub-ps- bis ps-Bereich und eine Intensität von 10¹⁴ W/cm² auf.

Eine andere Ausführung der Erfindung sieht vor, ein Target derart zu bestrahlen, dass der Vorderteil des nur einen Pumppulses mit definiertem zeitlichen Intensitätsverlauf beim Auftreffen auf ein Target eine räumlich zylindrische Verteilung des Plasmas mit den für das Lasing nötigen Parametern wie Elektronendichte und Temperatur erzeugt und eine traveling-wave-Anregung verwendet wird.

Wird ein Pumppuls - wie in einer weiteren Ausführungsform der Erfindung vorgesehen - auf ein durch eine Kapillarentladung erzeugtes plasmaförmiges Target gerichtet, so wird dieser Pumppuls in seinen Parametern, einschließlich des definierten zeitlichen Intensitätsverlaufs, an die Kapillarparameter angepasst und axial fokussiert. Das Kapillarentladungsplasma wird durch einen kurzen Strompuls, der durch eine dünne Festkörper-Kapillare läuft, erzeugt. Die Abmessungen der Kapillare liegen typischerweise für den Durchmesser im Bereich von einigen 100 µm bis einigen mm und für die Länge im Bereich von einigen mm bis einige 10 cm. Der kurze Stromimpuls bildet ein Vorplasma in der Kapillare aus, wodurch die Anforderungen an den Laserpuls bezüglich Ionisation begünstigt werden. Darüber hinaus kann ein Elektronendichteprofil ausgebildet werden, das die Ausbreitung des Laserpulses (Guiding-Effekt) über die gesamte Kapillarlänge begünstigt. Bei dieser Anordnung des axialen Pumpens wird eine automatische traveling-wave-Anregung garantiert.

Das erfindungsgemäße Verfahren gestattet mittels nur eines Pumpulses mit definiertem zeitlichen Intensitätsverlauf die Erzeugung kohärenter schmalbandiger Strahlung mit definierter Wellenlänge im Bereich von 4 bis 60 nm mit im Vergleich zum Stand der Technik weiter verringerter Pumpenergie. Wie erläutert, kann die zeitliche Struktur des Vorder- und Hauptteils des einzelnen Pumpstrahls so angepasst werden, dass ein optimaler Verstärkungsablauf erreicht wird.

Es hat sich überraschenderweise in einem Experiment zur räumlichen und zeitlichen Zusammenführung zweier Pumpstrahlen zur Erzeugung von Röntgenstrahlen gemäß der bekannten - und bereits im Stand der Technik erwähnten - Methode der Anregung mit einem längeren niederenergetischen Vorpuls und einem zeitlich verzögerten kurzen höherenergetischen Hauptpuls bei der Justage des Systems gezeigt, dass auch nur mit einem zeitlich geformten Einzelpuls entsprechend dem erfindungsgemäßen Verfahren der Lasingeffekt erreicht wird. Damit ist es möglich, mittels eines Pumppulses mit definiertem zeitlichen Intensitätsverlauf kohärentes Licht definierter Wellenlänge, insbesondere im Bereich von 4 bis 60 nm, mit i.V. zum Stand der Technik weiter verringerter Pumpenergie zu erzeugen. Da der Pumppuls bereits zu Beginn des erfindungsgemäßen Verfahrens in seinem Intensitätsverlauf zeitlich geformt wird - nämlich genau entsprechend der gewünschten Verstärkungsdynamik - , ist es möglich, unerwünschte Prozesse bei der Plasmabildung gezielt zu unterdrücken, wodurch das Einsetzen des Lasingeffektes unterstützt wird.

Bei der erfindungsgemäßen Lösung zum Pumpen von transienten Kurzpuls-Röntgenlasern mit nur einem Pumppuls mit zeitlich modulierter Intensitätsverteilung besteht nun keine Notwendigkeit mehr, aufwendige technische Mittel für die räumliche und zeitlich Zusammenführung zweier bisher benötigter Pumpstrahlen - Vorpuls und Hauptpuls - mit hoher Präzission vorzusehen, um eine möglichst exakte Übereinstimmung der Achsen beider Fokusverteilungen auf dem Target - wichtig für eine hohe Verstärkung - zu erreichen. Ebenso ist keine aufwendige Diagnostik zur Kontrolle der räumlichen Überiagerung beider Pumpstrahlen mehr erforderlich. Weiterhin treten in der erfindungsgemäß beschriebenen Lösung keine störenden Einflüsse aufgrund unterschiedlicher räumlicher Intensitätsverteilungen (hervorgerufen bisher durch die Verwendung zweier Pumpstrahlen - Vorpuls und Hauptpuls -) auf, welche zu Plasmainhomogenitäten und damit zu Störungen bei der Ausbreitung und Verstärkung des Röntgensignals führten. Wegen der effizienten Wechselwirkung der Pumpstrahlung mit dem erzeugten Plasma kann die notwendige Pumpenergie erheblich reduziert werden, wodurch auch die Größe des Pumplasers verringert werden kann.

Derartig formierte Pumpstrahlen, wie sie für die erfindungsgemäße Lösung beschrieben wurden, werden beispielsweise mit Kurzpulslasern, insbesondere chirped pulse amplication (CPA) Technik oder andere direktverstärkende Systeme, realisiert. Hierbei können diese sowohl durch die Verwendung aktiver als auch passiver Elemente, die die zeitliche oder spektrale Form der Laserstrahlung beeinflussen, im System auf kontrollierte Art und Weise erzeugt werden, beispielsweise bei einer Repititionsrate von einigen Hertz bis zu mehreren Kilohertz. Aktive Elemente sind beispielsweise elektrooptische bzw. magnetooptische Elemente; passive Elemente beispielsweise Masken und Blenden. Vorzugsweise wird die zeitliche Formung des Pulses durch kontrollierte Verstärkung in einem regenerativen oder Multipassverstärker oder auch durch die Einkopplung zwischen dem Oszillator und dem regenerativen Verstärker erreicht. Durch die passiven Elemente wird die gezielte Modifikation des Pulsspektrums - die spektrale Bearbeitung - erleichtert.

Im Rahmen der Erfindung wird eine Anordnung zur Erzeugung verstärkter spontaner Emission kohärenter kurzwelliger Strahlung, insbesondere zum Pumpen von transienten Kurzpuls-Röntgenlasem angegeben, die einen Ti:Saphir-Oszillator, einen Stretcher, einen regenerativen Verstärker, einen Nd:Glasverstärker kombiniert mit Raumfreuqenzfiltern und Kompressor sowie eine Fokussiereinrichtung und Target aufweist.

Die Erfindung wird im folgenden Ausführungsbeispiel anhand von Zeichnungen näher erläutert.

Dabei zeigen:
- Fig. 1: einen Pumpstrahl mit zeitlich modulierter Intensitätsverteilung;
- Fig. 2: eine Anordnung zur Erzeugung eines Pumpstrahls mit zeitlich modulierter Intensitätsverteilung.

Das Ausführungsbeispiel bezieht sich auf ein Verfahren zum Pumpen eines transienten Ag-Röntgenlasers bei der Wellenlänge von 13,9 nm, bei dem die Besetzungsinversion in einem Plasma, das hochgradig aus nickelähnlichen Ag-Ionen besteht, erzeugt wird.

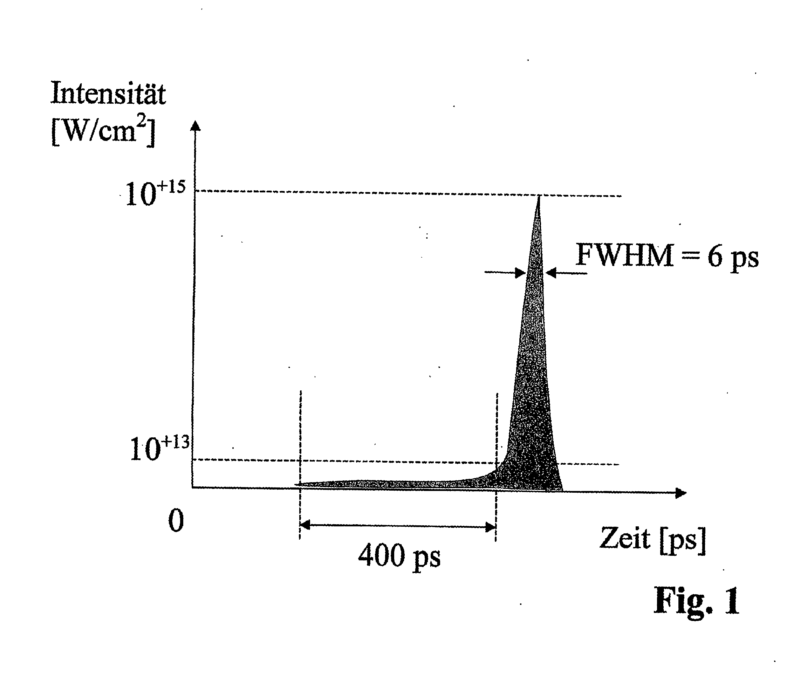

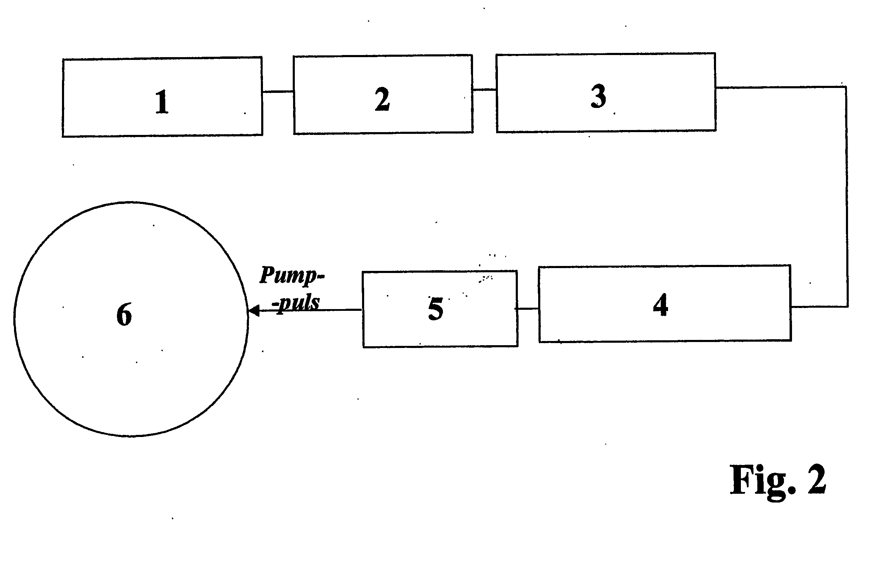

Der dafür verwendete und in Fig. 1 dargestellte zeitlich modulierte Pumpstrahl weist einen Vorder- und einen Haupteil auf, wobei die Intensität im Vorderteil über eine Dauer von 400 ps leicht ansteigt bei einem Pegel von < 1 % der maximalen Intensität des Hauptteils des Pumpstrahls mit einer Halbwertsbreite von 6 ps und einer Intensität von 10¹⁵ W/cm². Das erfindungsgemäße Verfahren wurde beispielsweise mit dem in Fig. 2 schematisch dargestellten Lasersystem, einem so genannten Nd:Glaslaser realisiert. Die Anordnung ist als CPA (chirped pulse amplification)-System ausgebildet, weist einen Ti:Saphir-Oszillator 1, einen Stretcher 2, einen regenerativen Verstärker 3, einen Nd:Glasverstärker kombiniert mit Raumfreuqenzfiltern 4 und Kompressor 5 sowie eine Fokussiereinrichtung (nicht dargestellt) und ein Target 6 auf. Diese Anordnung emittiert bei einer Wellenlänge von 1053 nm einen ps-Pumpstrahl mit zeitlich modulierter Intensitätsverteilung mit der maximalen Energie von 3 J.

## Patentansprüche

1. Verfahren zur Erzeugung verstärkter spontaner Emission kohärenter kurzwelliger Strahlung im Bereich von 4 nm bis 60 nm, insbesondere zum Pumpen von transienten Kurzpuls-Röntgenlasern,
**dadurch gekennzeichnet, dass**
mit nur einem Pumppuls im sub-ns-Bereich mit zeitlich modulierter Intensitätsverteilung, aufweisend einen Vorder- und einen Hauptteil, ein Target bestrahlt wird, wobei der Vorderteil des Pumppulses über eine Dauer von einigen 100 ps eine ansteigende Intensität von < 1 % der maximalen Intensität des Hauptteils des Pumppulses von 10¹² W/cm² bis 10¹⁸ W/cm² aufweist.

2. Verfahren nach Anspruch 1,
**dadurch gekennzeichnet, dass**
der Hauptteil des Pumppulses eine Halbwertsbreite im sub-ps- bis ps-Bereich und eine Intensität von ≥ 10¹⁴ W/cm² aufweist.

3. Verfahren nach Anspruch 1,
**dadurch gekennzeichnet, dass**
der Vorderteil des Pumppulses beim Auftreffen auf ein Target eine räumlich zylindrische Verteilung des Plasmas erzeugt und eine traveling-wave-Anregung verwendet wird.

4. Verfahren nach Anspruch 1,
**dadurch gekennzeichnet, dass**
ein durch eine Kapillarentladung erzeugtes plasmaförmiges Target mit einem an die Kapillarparameter angepassten und axial fokussierten Pumppuls bestrahlt wird.

5. Verfahren nach Anspruch 1,
**dadurch gekennzeichnet, dass**
der Vorder- und Hauptteil aufweisende Pumppuls mit zeitlich modulierter Intensitätsverteilung in nur einem hinreichend breitbandigen Pumplaser erzeugt wird.

6. Verfahren nach Anspruch 1,
**dadurch gekennzeichnet, dass**
die zeitlich modulierte Intensitätsverteilung des Pumppulses mittels aktiver und/oder passiver Modulationselemente im Zeit- oder Frequenzraum erzeugt wird.

7. Anordnung zur Erzeugung verstärkter spontaner Emission kohärenter kurzwelliger Strahlung im Bereich von 4 nm bis 60 nm, insbesondere zum Pumpen von transienten Kurzpuls-Röntgenlasern gemäß Anspruch 1,
aufweisend einen Ti:Saphir-Oszillator (1), einen Stretcher (2), einen regenerativen Verstärker (3), einen Nd:Glasverstärker kombiniert mit Raumfrequenzfiltern (4) und Kompressor (5) sowie Fokussiereinrichtung und Target (6), wobei mit nur einem Pumppuls im sub-ns-Bereich mit zeitlich modulierter Intensitätsverteilung, aufweisend einen Vorder- und einen Hauptteil, ein Target bestrahlt wird und der Vorderteil des Pumppulses über eine Dauer von einigen 100 ps eine ansteigende Intensität von < 1 % der maximalen Intensität des Hauptteils des Pumppulses von 10¹² W/cm² bis 10¹⁸ W/cm² aufweist.

## Claims

1. Method for the production of amplified spontaneous emission of coherent short-wave radiation in the range of 4 nm to 60 nm, especially for pumping transient short pulse x-ray lasers,
**characterized in that**
a target is irradiated with only one pump pulse in the range of sub-ns having a temporally modulated intensitiy distribution, the pump pulse comprising a forepart and a main part, wherein the forepart of the pump pulse comprises an increasing intensity of < 1 % of the maximum intensity of the main part of the pump pulse of 10¹² W/cm² to 10¹⁸ W/cm² over a period of some 100 ps.

2. The method of claim 1,
**characterized in that**
the main part of the pump pulse comprises a full width at half maximum in the range of sub-ps to ps and comprises an intensity of ≥ 10¹⁴ W/cm².

3. The method of claim 1,
**characterized in that**
the forepart of the pump pulse produces a spatial cylindrical plasma distribution at impact on a target, and **in that** a traveling-wave excitation is used.

4. The method of claim 1,
**characterized in that**
a plasmatic target produced by a capillary discharge is irradiated with a pump pulse that is adapted to the capillary parameters and that is axially focused.

5. The method of claim 1,
**characterized in that**
the pump pulse comprising a forepart and a main part and having a temporally modulated intensity distribution is produced in only one sufficiently broad banded pump laser.

6. The method of claim 1,
**characterized in that**
the temporally modulated intensity distribution of the pump pulse is produced by active and/or passive modulation elements in the time- and frequency-space.

7. Arrangement for the production of amplified spontaneous emission of coherent short-wave radiation in the range of 4 nm to 60 nm, especially for pumping transient short pulse x-ray lasers according to claim 1,
comprising a Ti:sapphire oscillator (1), a stretcher (2), a regenerative amplifier (3), a Nd:glass amplifier combined with spatial frequency filters (4) and a compressor (5) as well as a focusing arrangement and a target (6), wherein a target is irradiated with only one pump pulse in the range of sub-ns having a temporally modulated intensitiy distribution, the pump pulse comprising a forepart and a main part, and wherein the forepart of the pump pulse comprises an increasing intensity of < 1 % of the maximum intensity of the main part of the pump pulse of 10¹² W/cm² to 10¹⁸ W/cm² over a period of some 100 ps.

## Revendications

1. Procédé de production d'émission spontanée amplifiée de rayonnement cohérent de courte longueur d'onde à l'échelle de 4nm à 60 nm, notamment pour le pompage de lasers à rayons X transitoires à impulsion brève,
**caractérisé en ce qu'**
une cible est irradiée par seulement une impulsion pompe à l'échelle sub-ns comprenant une distribution d'intensité modulée temporellement, l'impulsion pompe comprenant une partie avant et une partie principale, dans lequel la partie avant de l'impulsion pompe comprend une intensité montante de < 1 % de l'intensité maximale de la partie principale de l'impulsion pompe de 10¹² W/cm² à 10¹⁸ W/cm² pour une durée de quelques 100 ps.

2. Procédé selon la revendication 1,
**caractérisé en ce que**
la partie principale de l'impulsion pompe comprend une largeur à mi-hauteur à l'échelle sub-ps à ps et qu'elle comprend une intensité de ≥ 10¹⁴ W/cm².

3. Procédé selon la revendication 1,
**caractérisé en ce que**
la partie avant de l'impulsion pompe produit une distribution spatialement cylindrique du plasma lors de l'impact sur une cible, et **en ce qu'**une excitation par onde progressive est utilisée.

4. Procédé selon la revendictaion 1,
**caractérisé en ce qu'**
une cible plasmatique produite par une décharge capillaire est irradiée par une impulsion pompe adaptée aux paramètres capillaires et focalisée axialement.

5. Procédé selon la revendication 1,
**caractérisé en ce que**
l'impulsion pompe comprenant une partie avant et une partie principale et comprenant une distribution d'intensité modulée temporellement, est produite dans seulement un laser pompe à bande suffisamment large.

6. Procédé selon la revendication 1,
**caractérisé en ce que**
la distribution d'intensité modulée temporellement de l'impulsion pompe est produite par des éléments de modulation actifs et/ou passifs dans l'espace de temps et de fréquences.

7. Dispositif de production d'émission spontanée amplifiée de rayonnement cohérent de courte longueur d'onde à l'échelle de 4nm à 60nm, notamment pour le pompage de lasers à rayons X transitoires à impulsion brève selon la revendication 1,
comprenant un oscillateur Ti:saphir (1), un stretcher (2), un amplificateur régénératif (3), un amplificateur Nd:verre combiné à des filtres de fréquences spatiales (4) et un compresseur (5) ainsi qu'un dispositif de focalisation et une cible (6), dans lequel une cible est irradiée par seulement une impulsion pompe à l'échelle sub-ns comprenant une distribution d'intensité modulée temporellement, l'impulsion pompe comprenant une partie avant et une partie principale, et dans lequel la partie avant de l'impulsion pompe comprend une intensité montante de < 1 % de l'intensité maximale de la partie principale de l'impulsion pompe de 10¹² W/cm² à 10¹⁸ W/cm² pour une durée de quelques 100 ps.
